# EUROPEAN PATENT APPLICATION

(11) **EP 1 256 884 A1**
(43) Date of publication of application: **13.11.2002**
(21) Application number: 01111447.7
(22) Date of filing: 10.05.2001
(51) Int. Cl.: G06F 17/30

(54) **Patent information system**

(71) Applicant: SIEMENS AKTIENGESELLSCHAFT, 80333 München (DE)
(72) Inventor: Frers, Gerold, 85560 Ebersberg (DE)

(57) **Abstract**

A search engine is set out which allows a user to access one or more database for searching documents, wherein the search engine provides assisting filters, profiles and related sub-profiles to assist in limiting the search before actually executing search terms. Additional criteria may be placed on displaying the search results and displaying select portions of documents. The documents may relate to intellectual proprety and include patents, trademarks, copyrights and the like.

## Description

### Brief Description of One Aspect of the Invention

Some key terms include: patent information electronic based on paper distribution and search possibilities, preselection actual delivery, wide wide information, access from all sides or locations, exchange of information, merging of a plurality of sources of information with one mask.

Herein a patent, legal or other type of information providing and distribution system is set out. Included are distribution of new publications from more than one patent office database, or at least one database, provided with a different patent data such as a short abstract including one selected drawing as a source of information. The operating system and communication software may include *Fulcrum* running an Oracle database. Processing systems include most known processors including writable and unwritable memories which serves as a basic system wherein the communication software filegramm provides basic data with a customer data (user data) accordingly on a mask. In a flowchart, a primary function is a set up. The system takes into account a different user criteria or user requirements. With possibility to select the interesting patent documents of competitors by using user profiles. Moreover in a database, research is possible over the same mask period or database (s) can be selected after allowing access only one time or providing access to someone onetime. The access is granted by an access tool.

One basic idea of the invention is that several data bases are merged into one information source. By using intranet more than one information content is provided for a broad group of users. Actions done by users are further processed and included into the working process in the department which is concerned. Information which is attended into the respective documents as a comment is especially relevant.

The further idea is the possibility of immediately providing further documents (full text). This action, although causes a reaction in the working process, on the support side wherein the user (Sachbearbeiter) who is in charge, is informed and for whom the same information can be provided.

Patent informations system with profile service function wherein 1 or more profiles for implementing the areas of interest of the according to the technical areas of the customer or the user. The profiles are similar to the search strategies in data base system but they are provided individually and updated weekly by inserting new data in an update process. The profiles can be implemented very broadly or very specifically according to the Request of the customer. A special database which search software allows providing and synchronising or co-ordinating a profile at the work place of the customer. Here an intarnet access is provided thereto.

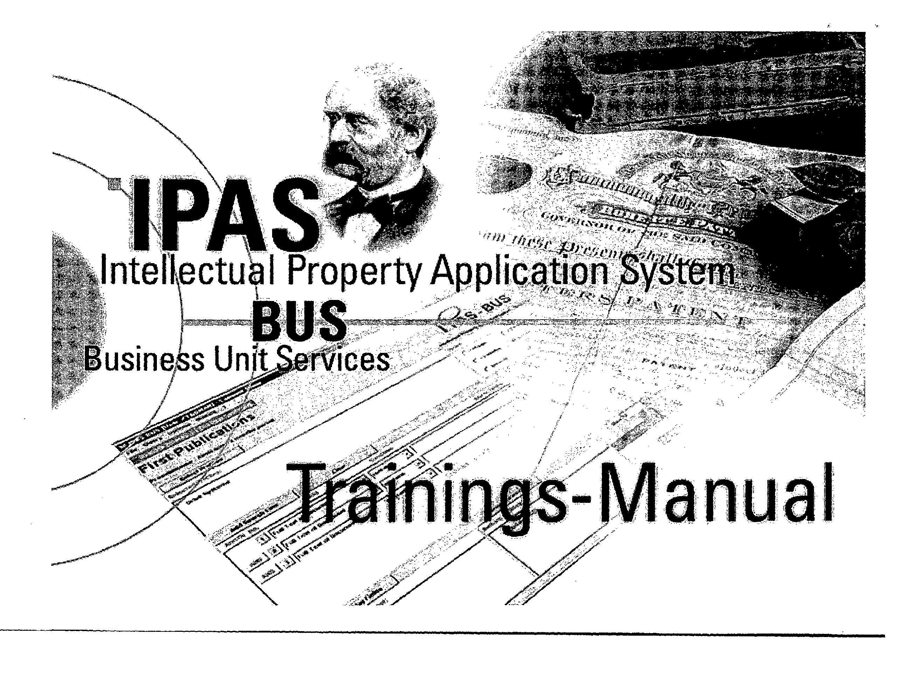

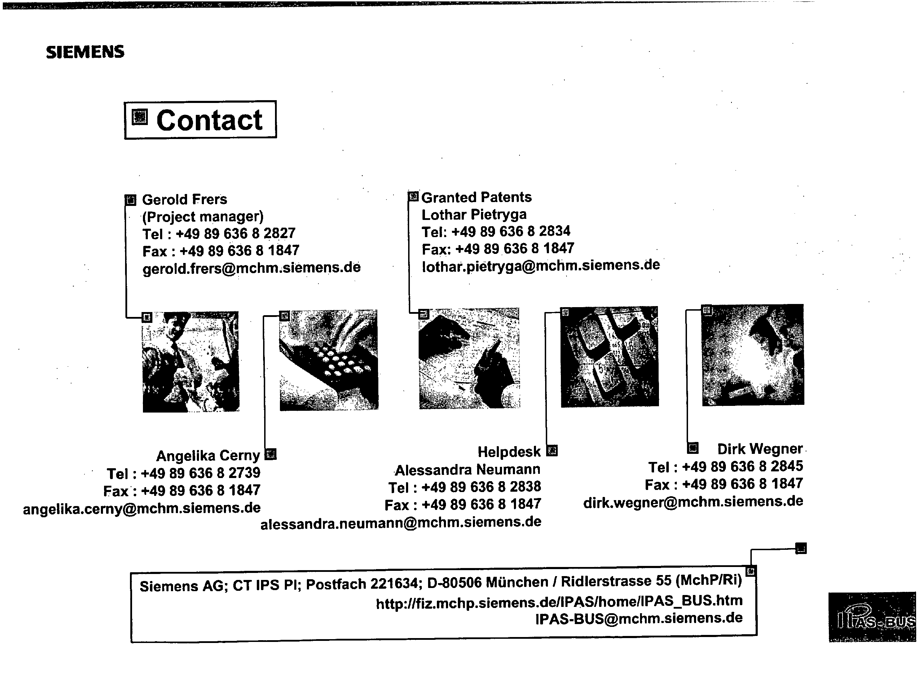

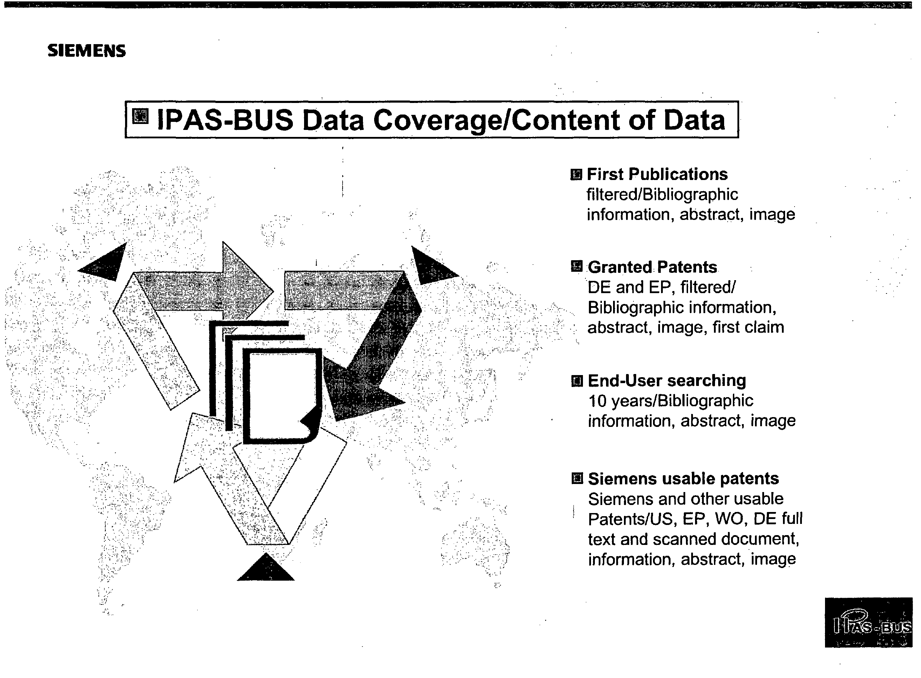

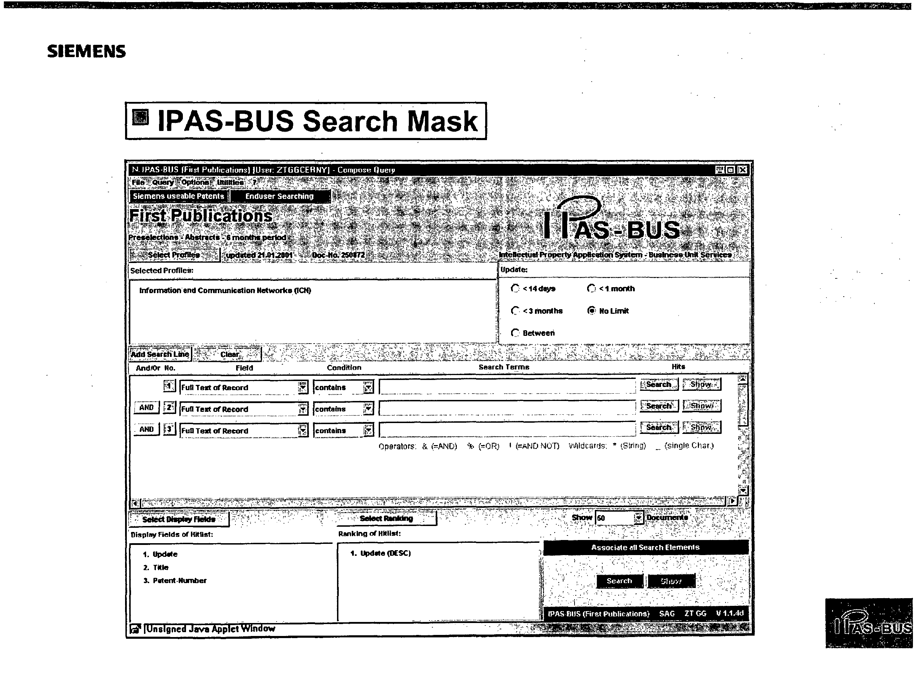

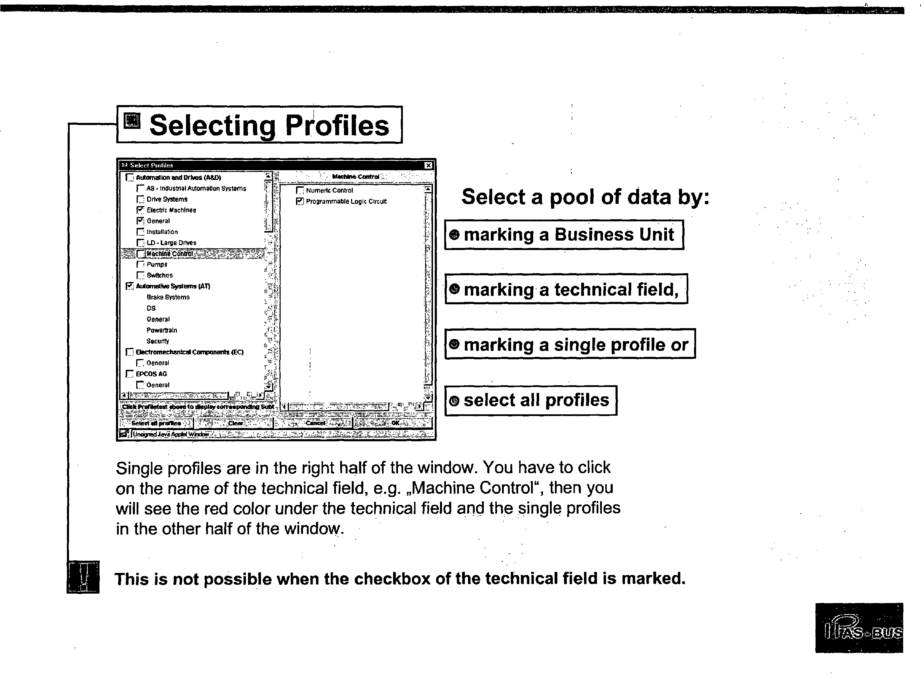

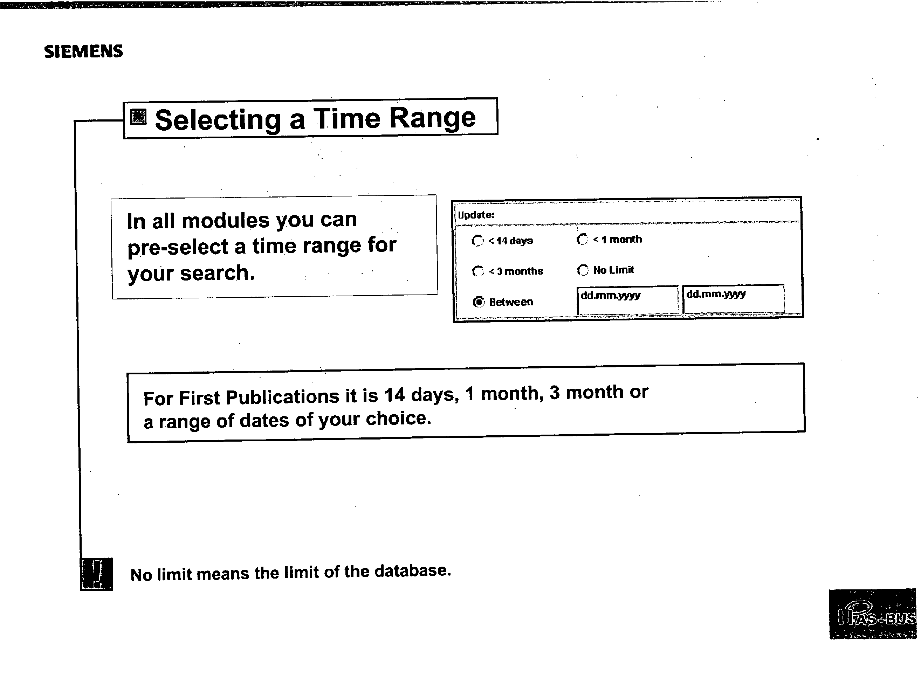

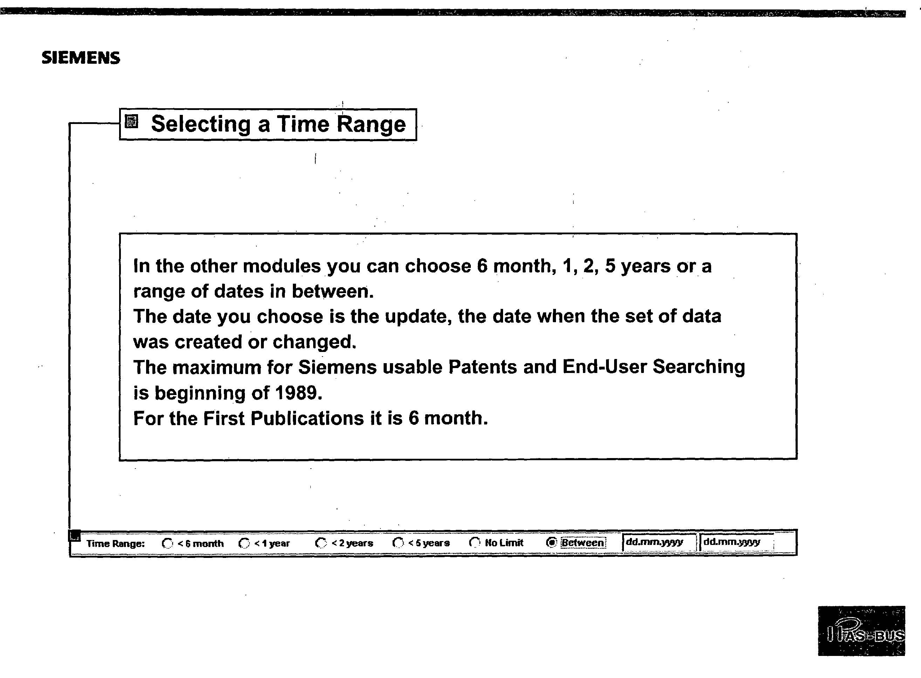

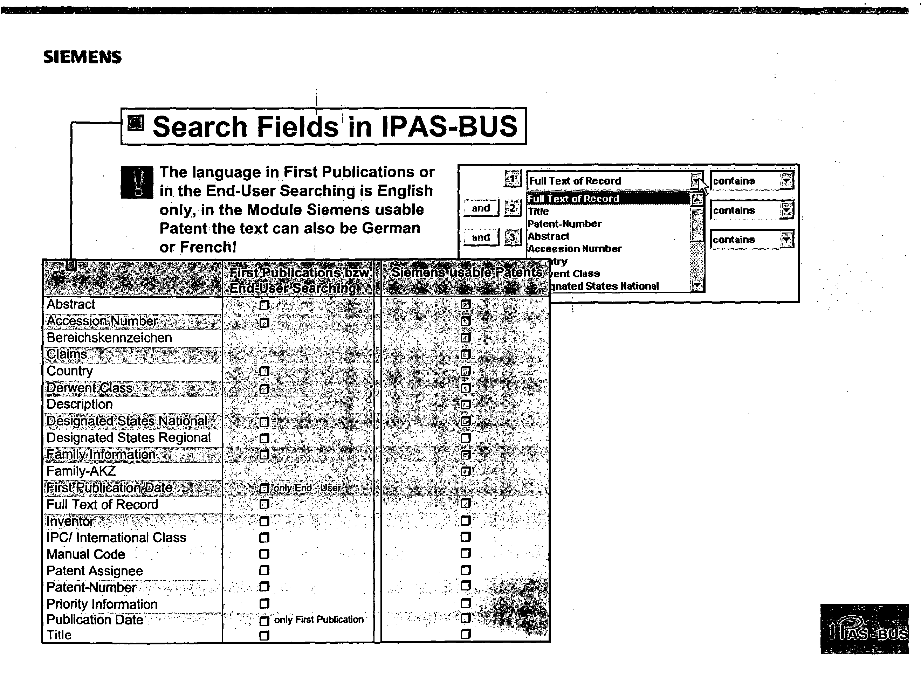

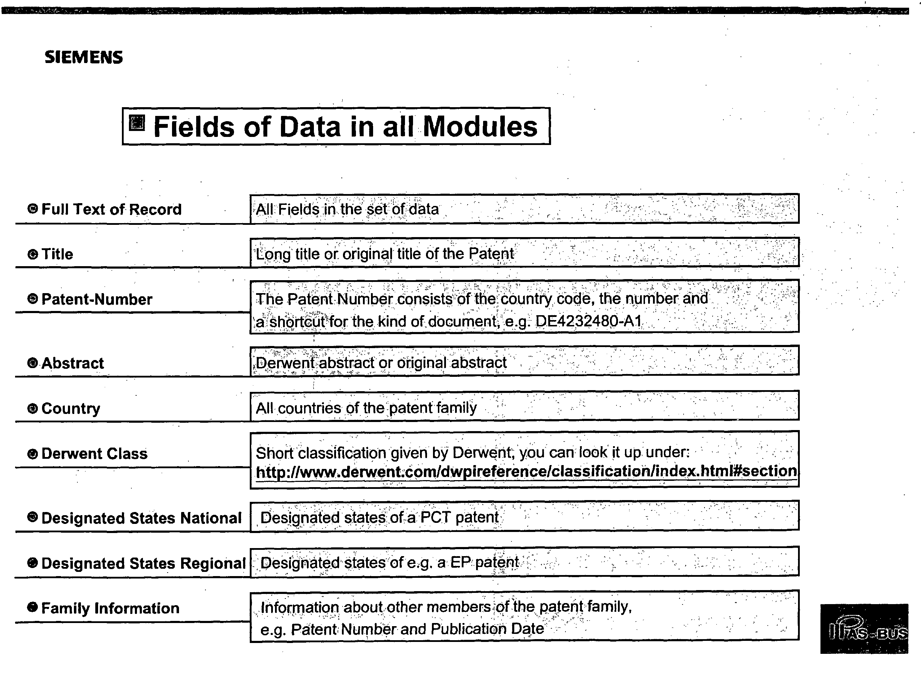

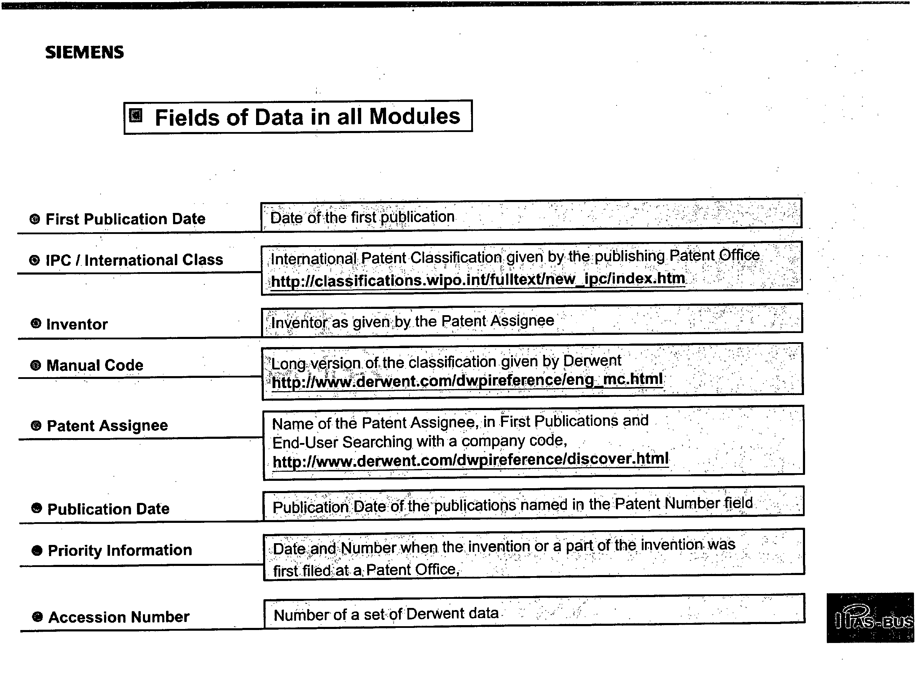

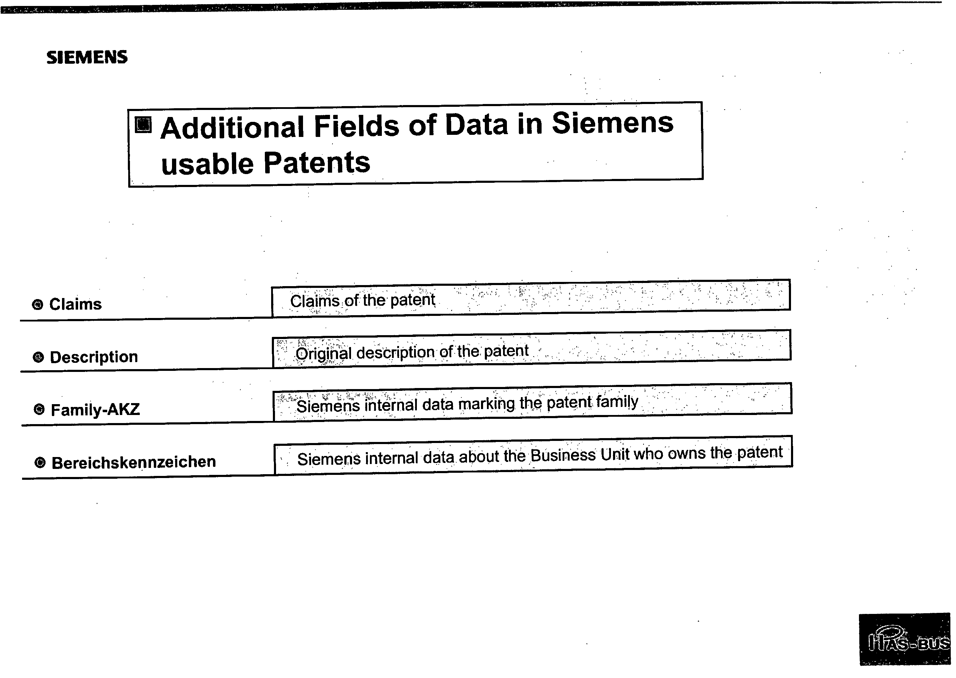

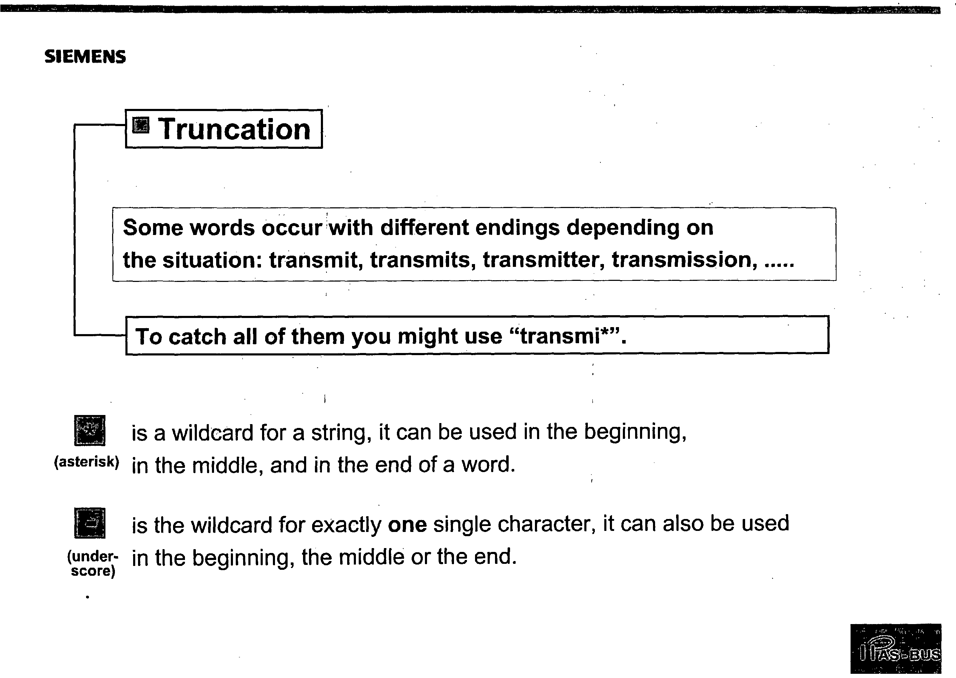

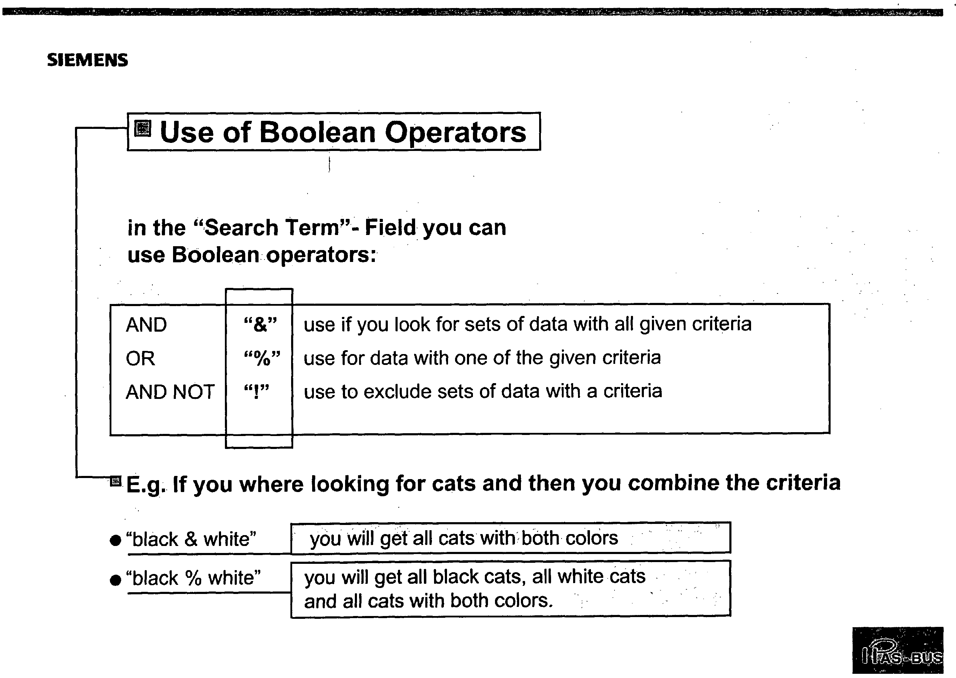

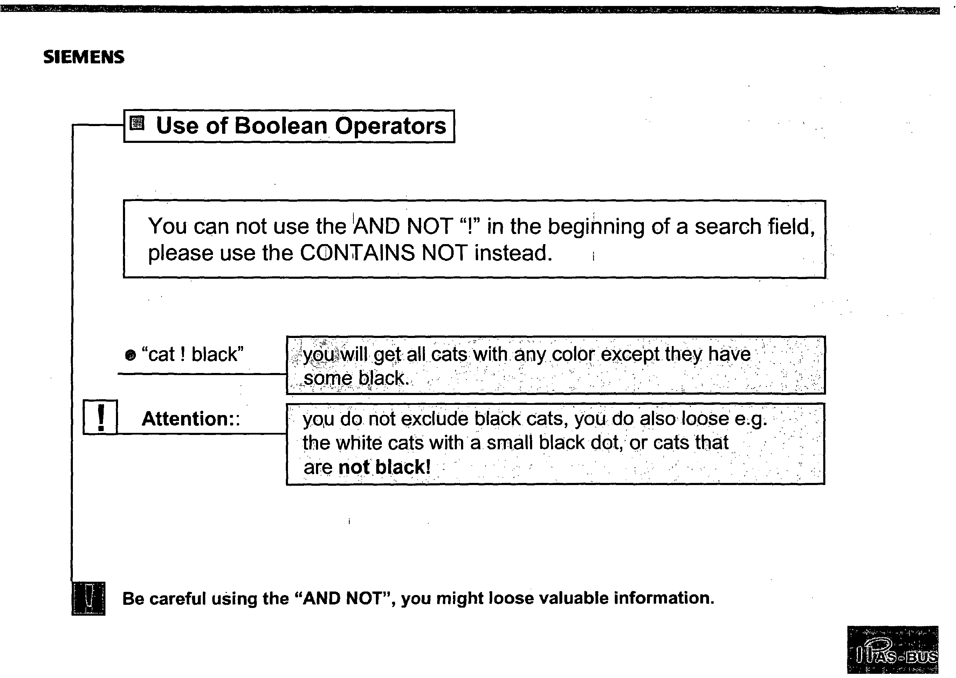

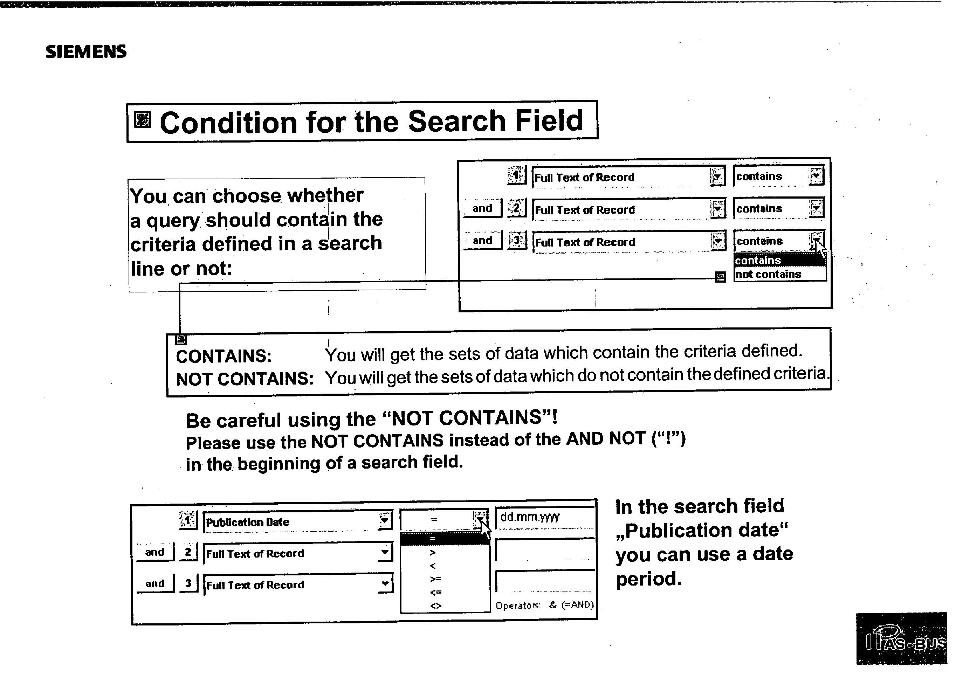

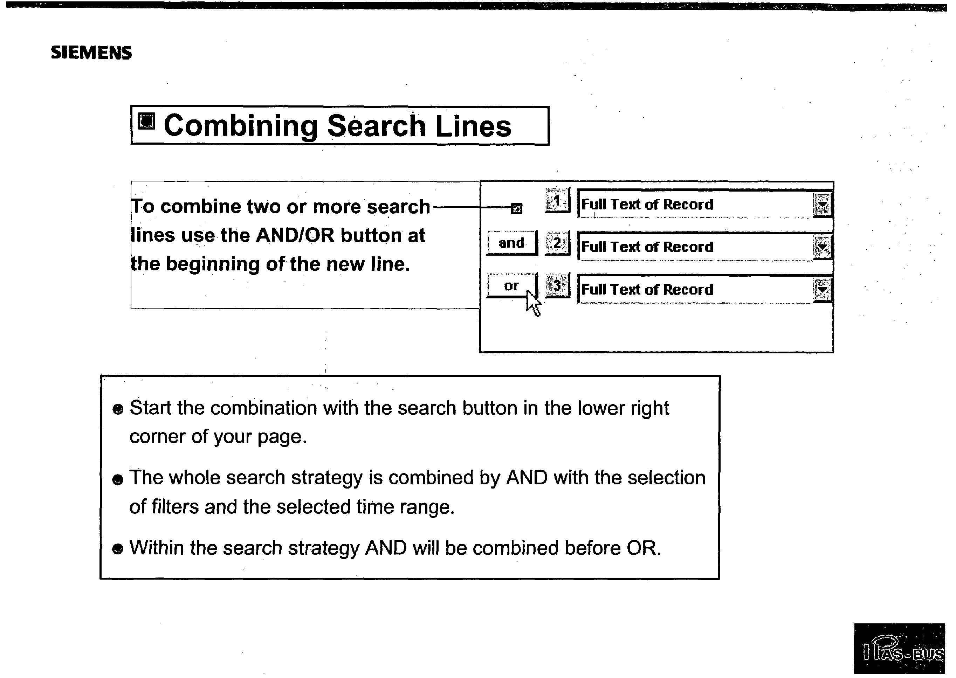

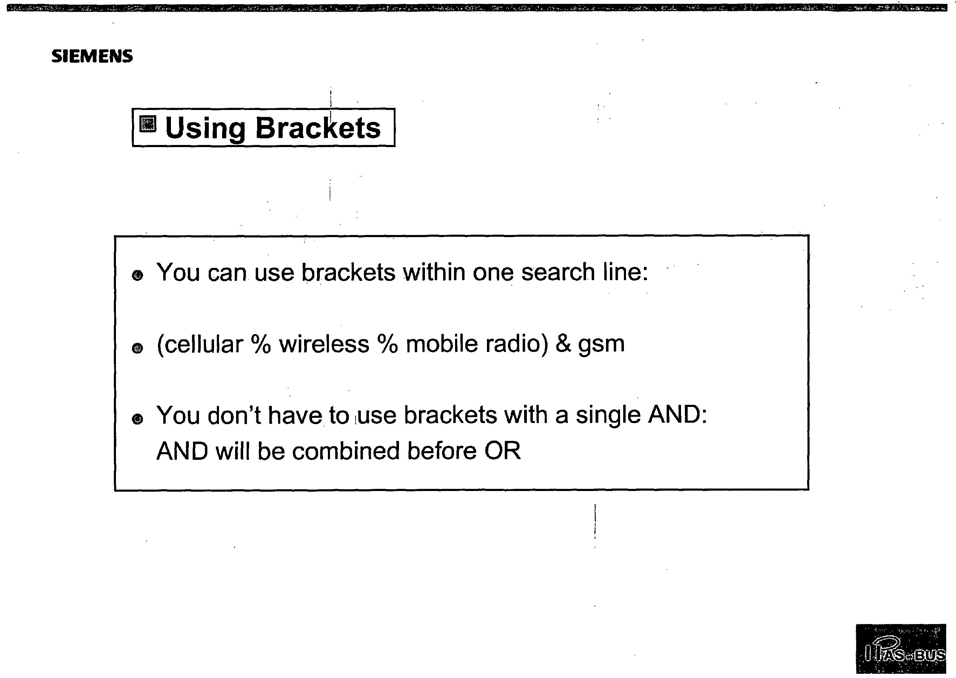

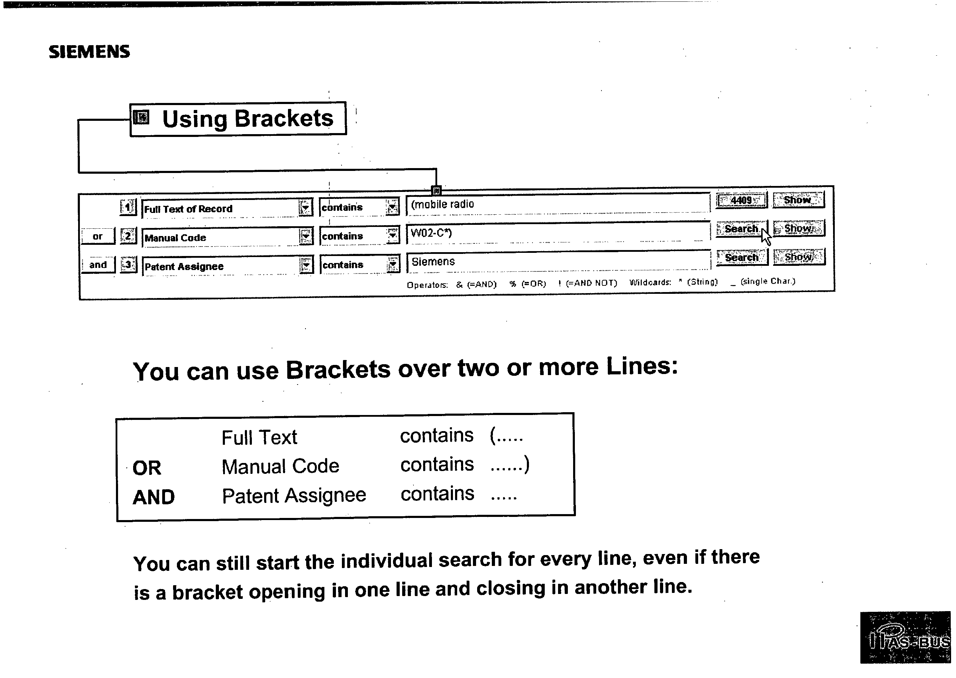

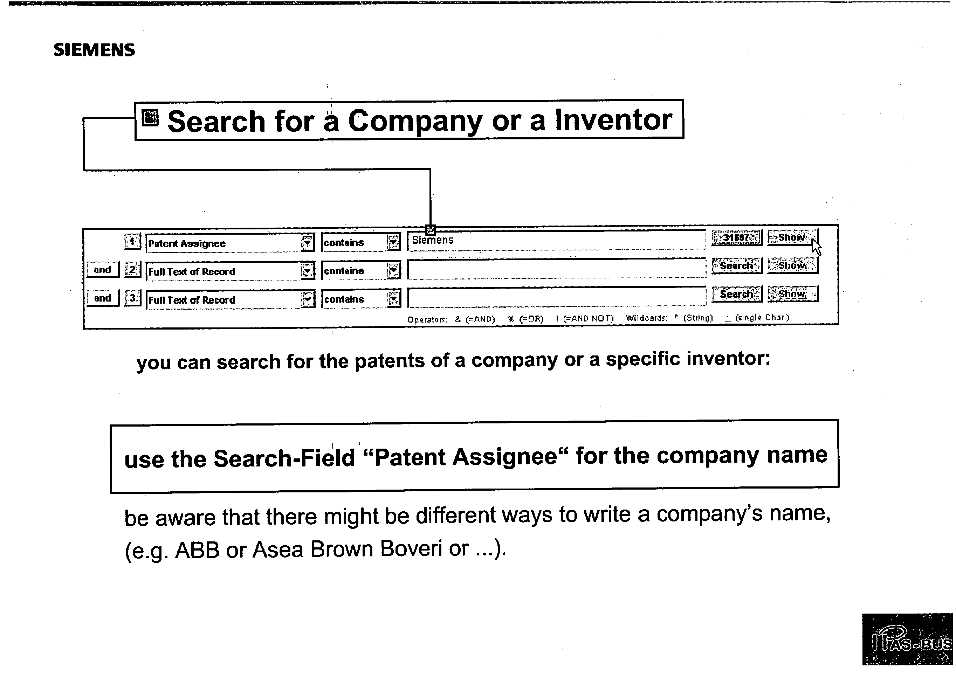

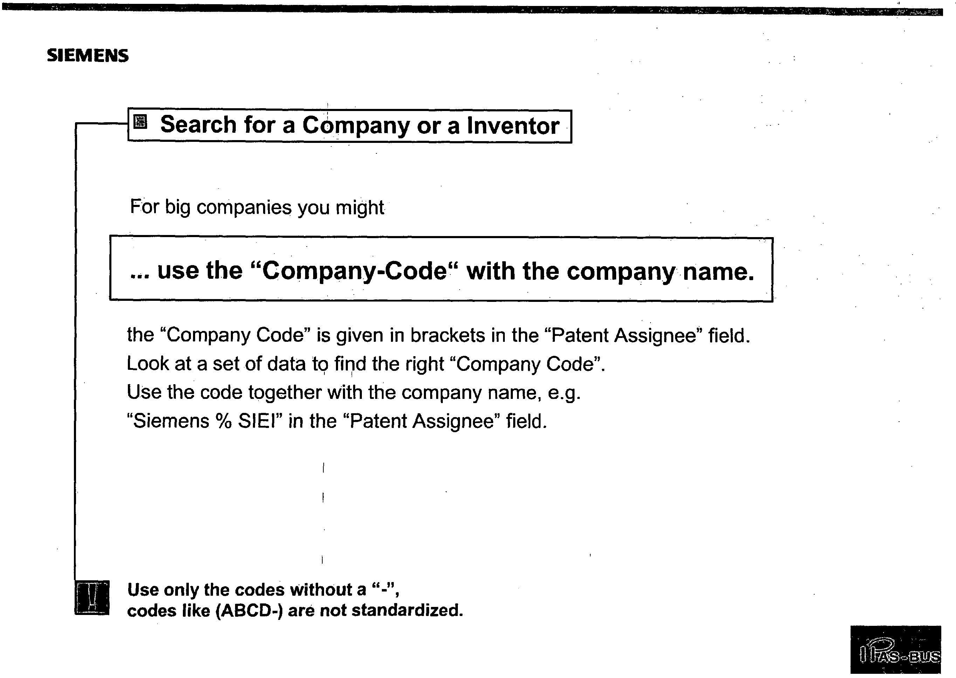

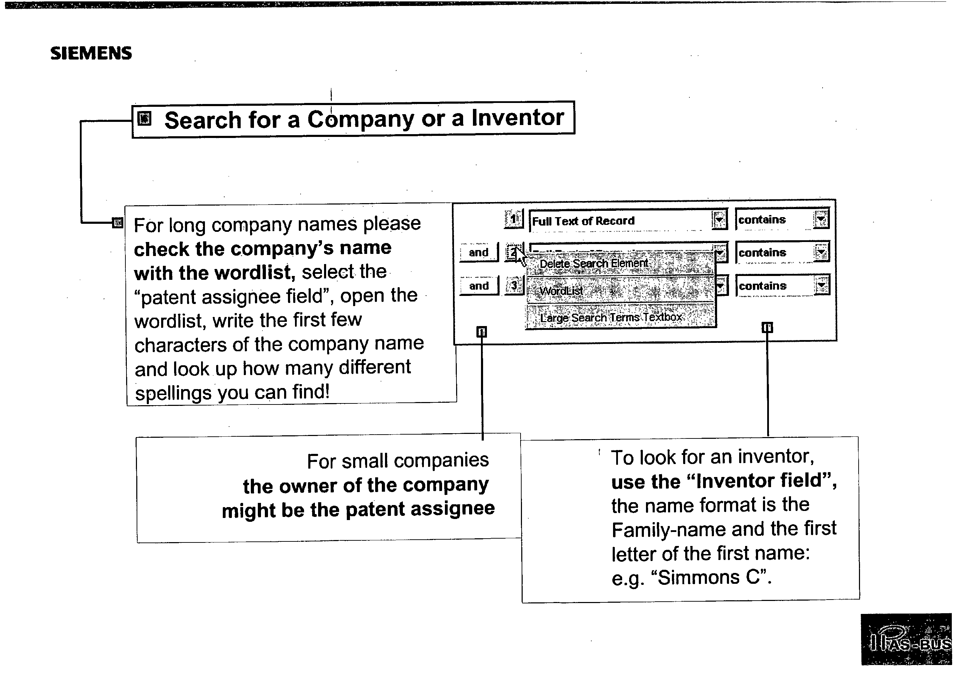

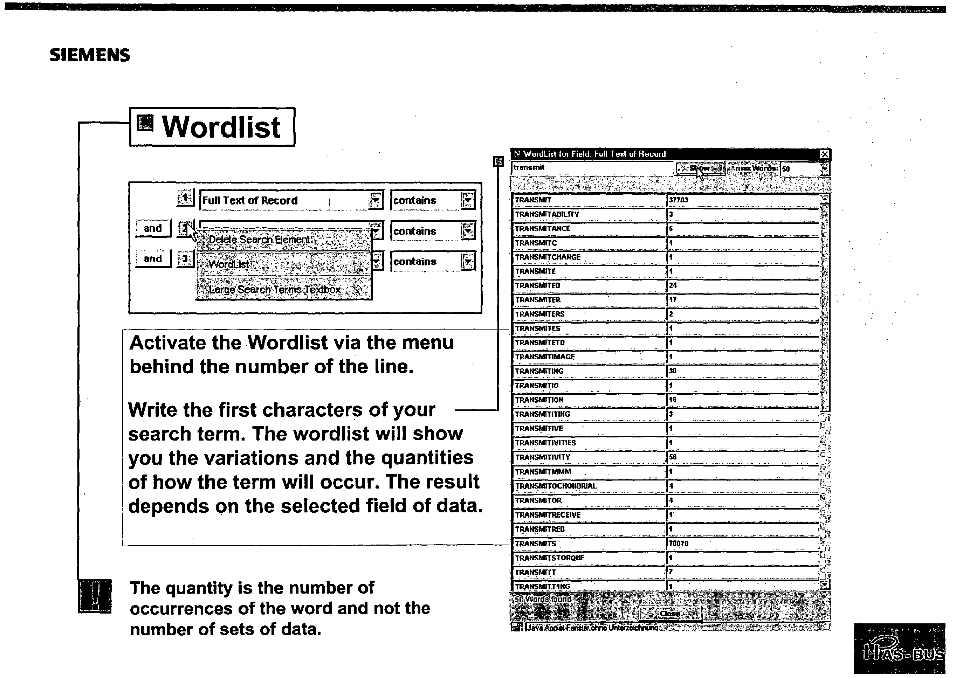

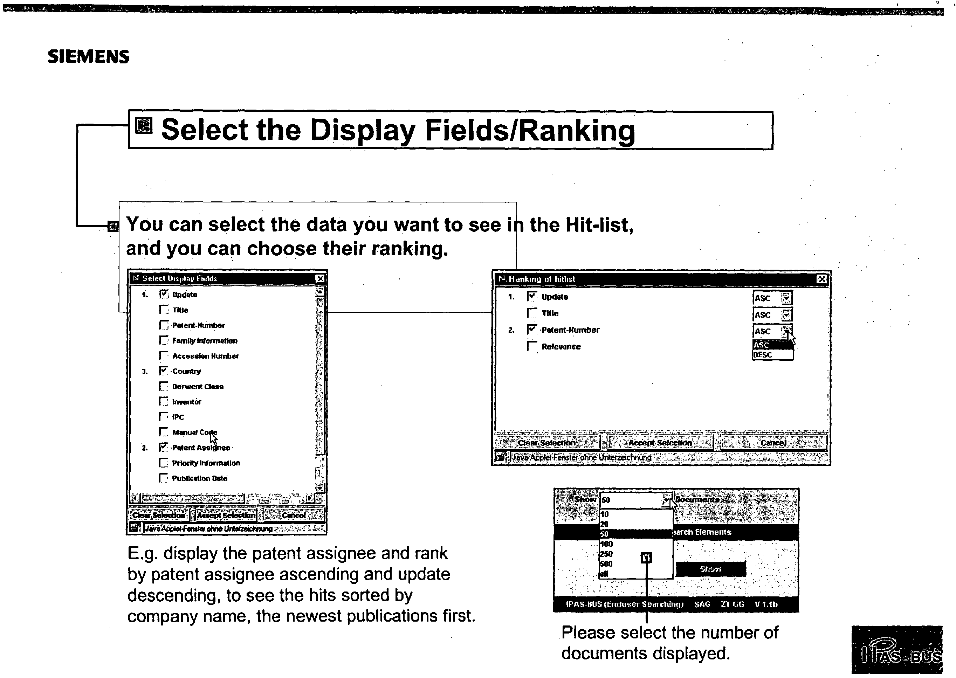

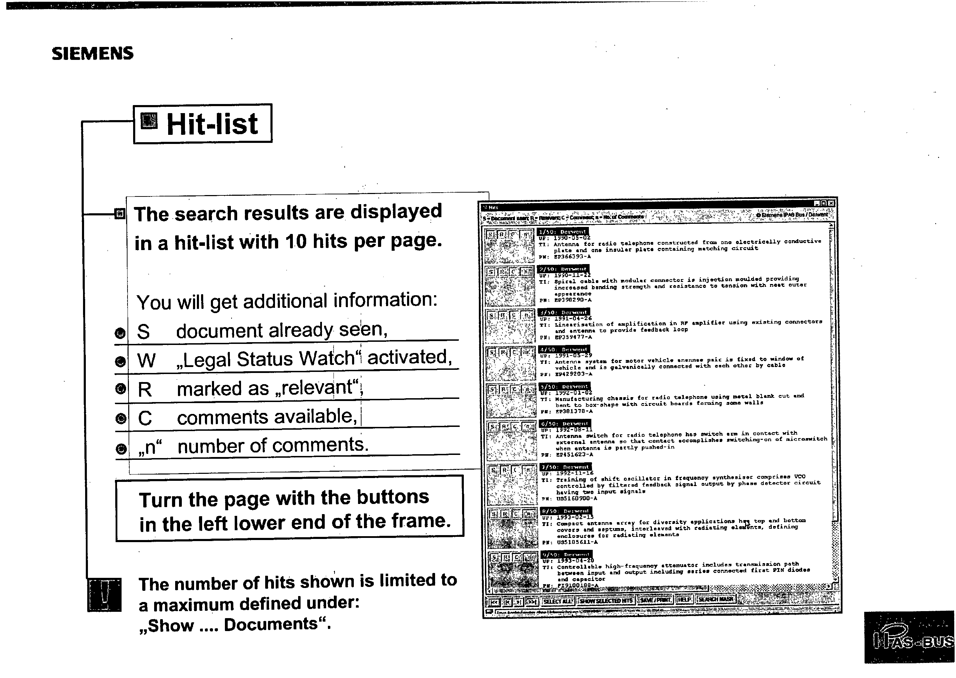

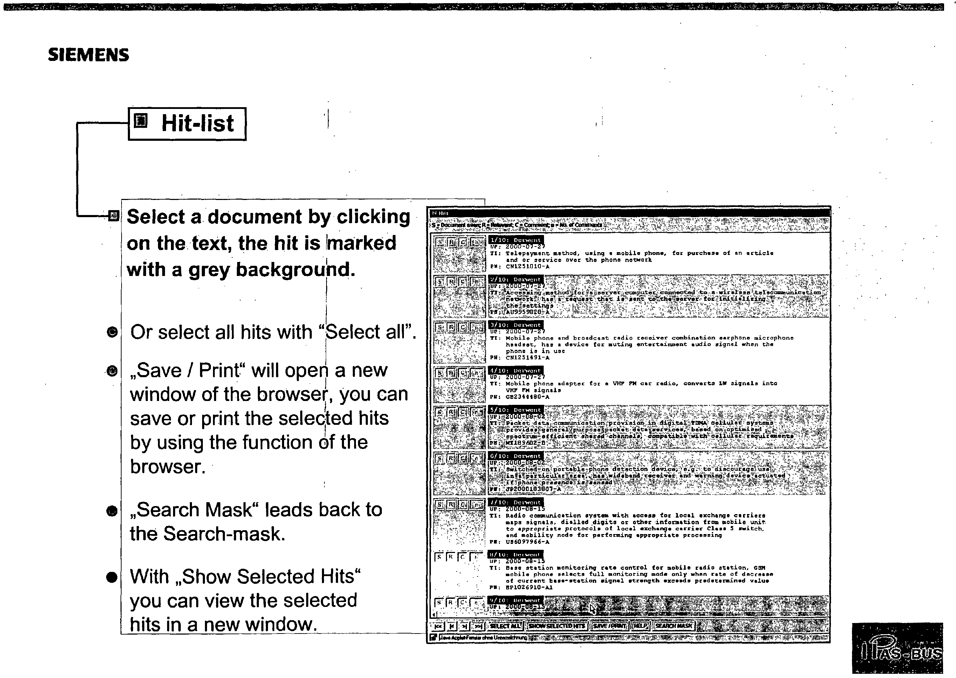

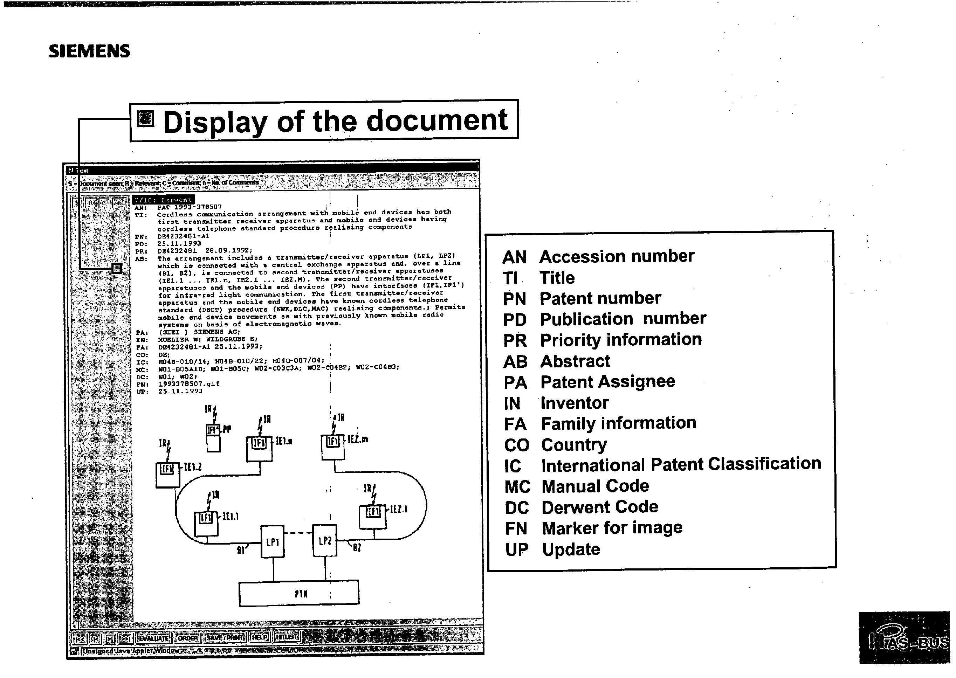

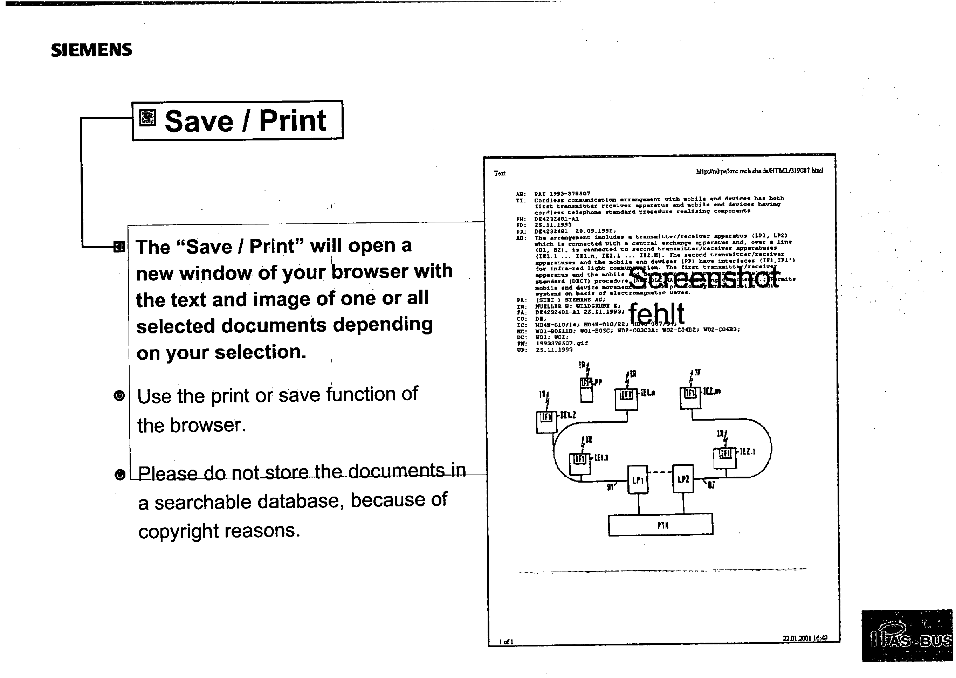

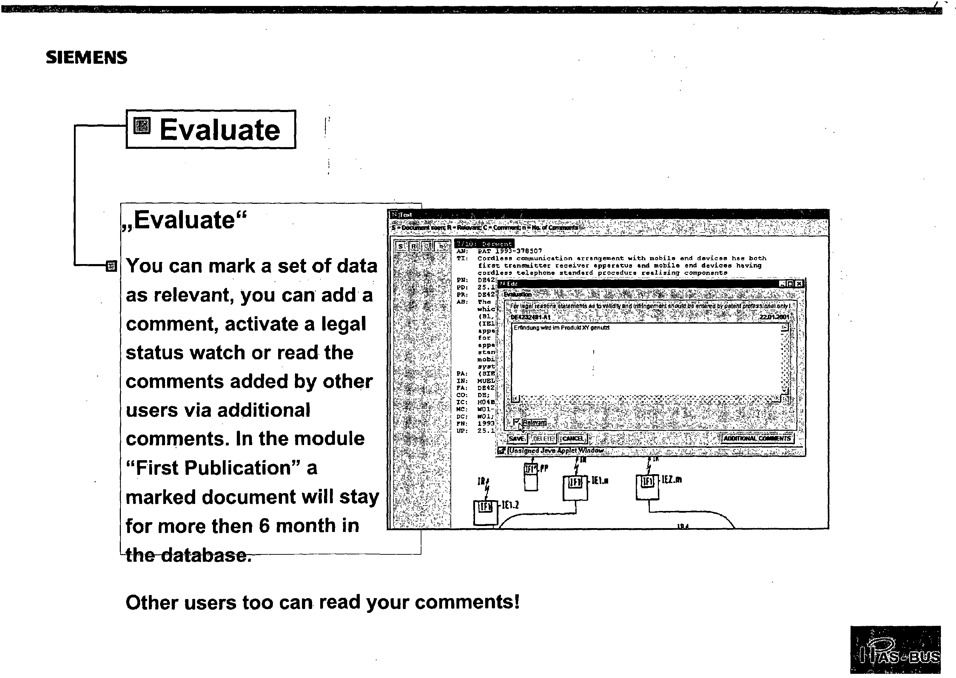

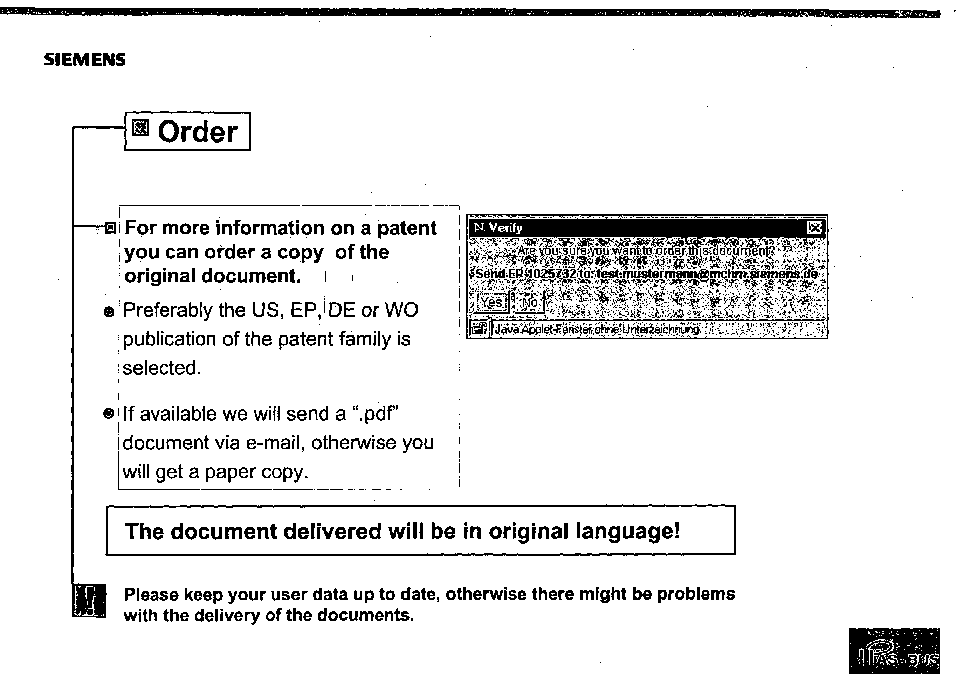

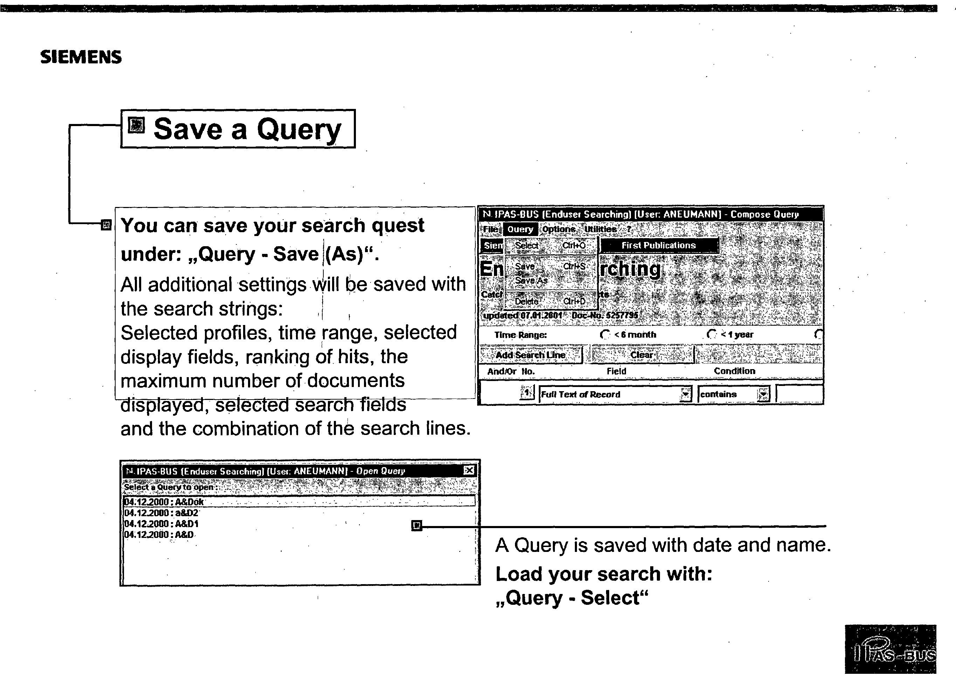

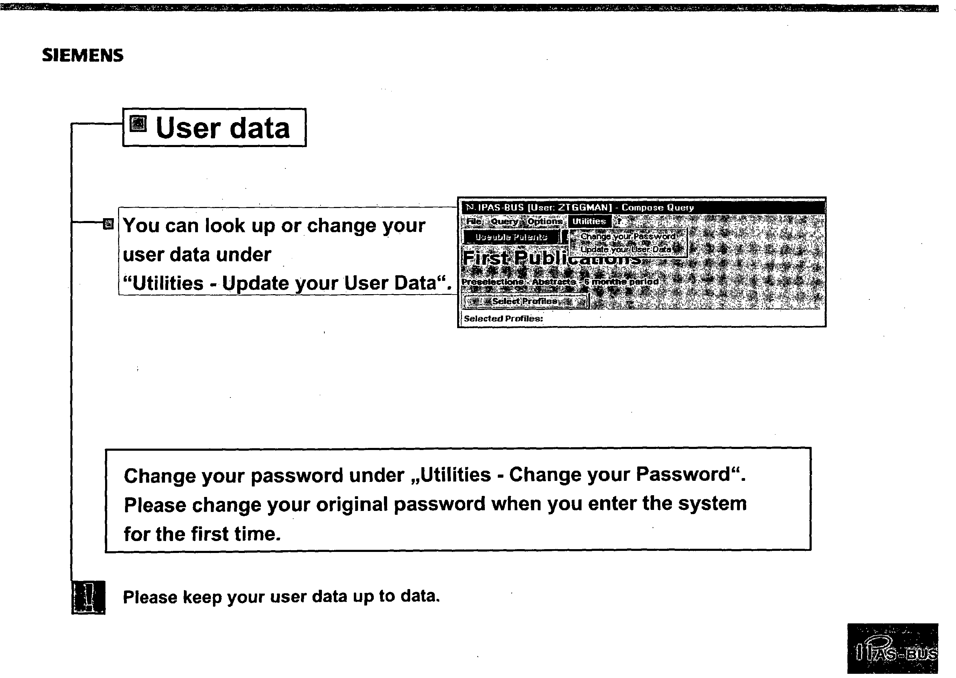

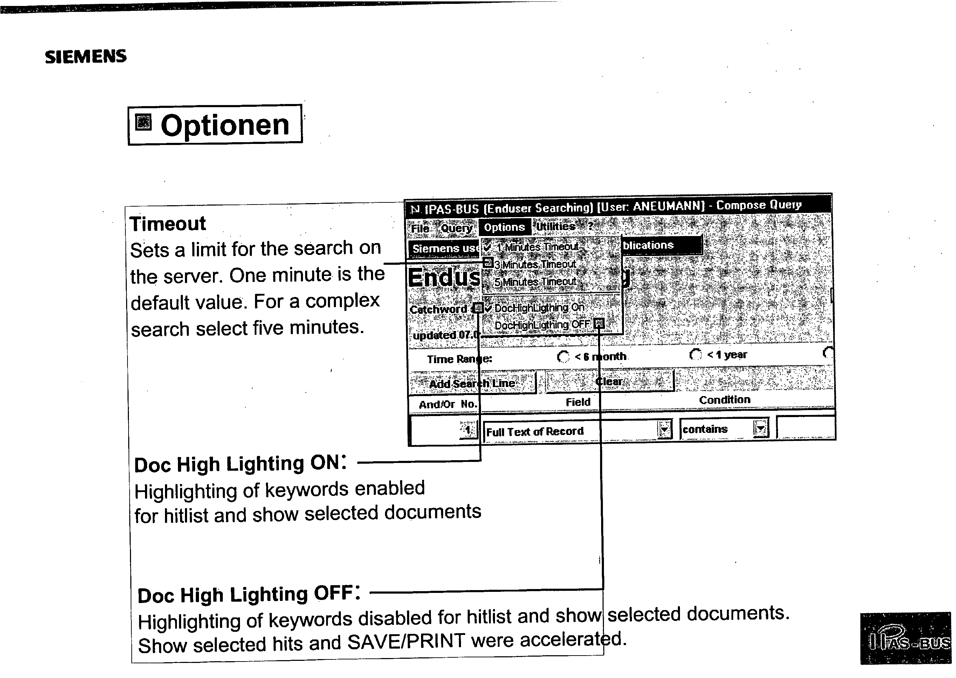

## Claims

1. An apparatus for providing information, comprising:
a. a processor and memory which stores information controlled by the processor;
b. logic that generates a query comprising a plurality of filters relating to a target item;
c. logic that generates a second query comprising profiles having a predefined relationship to at least one of said filters and relating to the target item;
d. logic that generates a third query comprising subprofiles having a predefined relationship to at least one of said profiles and relating to the target item;
e. an interactive unit for presenting a user with the query, receiving input from the user responsive to the query and presenting information relating to the target item to the user;
f. logic that queries a network based on the query; and
g. logic that retrieves information from at least one information source associated with the network, the information relating to the target item.

2. The apparatus according to claim 1, wherein said target item is one of intellectual property and information relating to intellectual property.

3. The apparatus according to claims 1-2, wherein the at least one information source is at least one database and the filters relate to one of the at least one database.

4. The apparatus according to claims 1-3, wherein the profiles are at least one technical classification of one of intellectual property and information relating to intellectual property.

5. The apparatus according to claims 1-4, wherein the subprofiles are at least one second technical classification of the at least one technical classifications.

6. The apparatus according to claims 1-5, further comprising logic that generates at least one search field for information relating to one of intellectual property and information relating to intellectual property.

7. The apparatus according to claim 6, wherein the at least one search field is searchable with truncation.

8. The apparatus according to claims 6-7, wherein the at least one search field is searchable with Boolean operators.

9. The apparatus according to claims 6-8, wherein the at least one search field is searchable with condition operators.

10. The apparatus according to claims 6-9, wherein the at least one search field comprises a plurality of combinable search fields.

11. The apparatus according to claims 6-10, wherein the at least one search field is searchable with natural language.

12. The apparatus according to claims 6-11, further comprising a list of terms and operators which may be selected and inputted in the at least one search field.

13. The apparatus according to claims 1-12, wherein target information is displayed by field and rank, the rank based on a number of target hits.

14. The apparatus according to claims 1-13, further comprising logic for receiving marked information from the target information, receiving user input, and associating the marked information and user input for later retrieval.

15. A method for searching at least one database, comprising the steps of:
a. generating a query comprising a plurality of filters relating to a target item;
b. generating a second query comprising profiles having a predefined relationship to at least one of said filters and relating to the target item;
c. generating a third query comprising subprofiles having a predefined relationship to at least one of said profiles and relating to the target item;
d. interactively presenting the filters, profiles and subprofiles to a user;
e. querying a network based on the query; and
f. retrieving information from at least one information source associated with the network, the information relating to the target item.

16. The method according to claim 15, wherein the second query is generated in response to user input selecting at least one of the filters.

17. The method according to claim 15-16, wherein the third query is generated in response to user input selecting at least one profile.

18. The method according to claim 15-17, wherein said target item is one of intellectual property and information relating to intellectual property.

19. The method according to claims 15-18, wherein the filters relate to specific databases.

20. The method according to claims 15-19, wherein the profiles are at least one technical classification of one of intellectual property and information relating to intellectual property.

21. The method according to claims 15-20, wherein the subprofiles are at least one second technical classification of the at least one technical classifications.

22. The method according to claims 15-21, further comprising the step of generating at least one search field for information relating to one of intellectual property and information relating to intellectual property.

23. The method according to claims 22, wherein the at least one search field is searchable with truncation.

24. The method according to claims 22-23, wherein the at least one search field is searchable with Boolean operators.

25. The method according to claims 22-24, wherein the at least one search field is searchable with condition operators.

26. The method according to claims 22-25, wherein the at least one search field comprises a plurality of combinable search fields.

27. The method according to claims 22-26, wherein the at least one search field is searchable with natural language.

28. The method according to claims 22-28, further comprising a list of terms and operators which may be selected and inputted in the at least one search field.

29. The method according to claims 15-28, wherein target information is displayed by field and rank, the rank based on a number of target hits.

30. The method according to claims 15-29, further comprising logic for receiving marked information from the target information, receiving user input, and associating the marked information and user input for later retrieval.

31. A computer program embedded on a computer readable medium that provides information, comprising:
a. a code segment that generates a query comprising a plurality of filters relating to a target item;
b. a code segment that generates a second query comprising profiles having a predefined relationship to at least one of said filters and relating to the target item;
c. a code segment that generates a third query comprising subprofiles having a predefined relationship to at least one of said profiles and relating to the target item;
d. a code segment that queries a network based on the query; and
e. a code segment that retrieves information from at least one information source associated with the network, the information relating to the target item.
